# FASCICULE DE BREVET EUROPEEN

(11) **EP 1 885 575 B1**
(45) Date de publication et mention de la délivrance du brevet: **27.04.2011**
(21) Numéro de dépôt: 06794424.9
(22) Date de dépôt: 12.05.2006
(51) Int. Cl.: B60W 20/00

(54) **PROCEDE DE TRANSMISSION DE PUISSANCE D'UN VEHICULE HYBRIDE ENTRE UN ARBRE D'UN MOTEUR THERMIQUE ET UN ARBRE DE ROUES D'UN VEHICULE**
VERFAHREN ZUR LEISTUNGSÜBERTRAGUNG IN EINEM HYBRIDFAHRZEUG ZWISCHEN DER WÄRMEKRAFTMASCHINENWELLE UND EINER RADACHSE
METHOD OF TRANSMITTING THE POWER OF A HYBRID VEHICLE BETWEEN A HEAT ENGINE SHAFT AND A WHEEL AXLE SHAFT OF THE VEHICLE

(30) Priorité: 30.05.2005 FR 0551411
(43) Date de publication de la demande: 13.02.2008
(73) Titulaire: Peugeot Citroën Automobiles Société Anonyme, 78140 Velizy Villacoublay (FR)
(72) Inventeur: ROCQ, Gaëtan, F-78125 La Boissière Ecole (FR); LE NEINDRE, Yvan, F-75017 Paris (FR); LAUNAY, Cédric, F-92130 Issy-les-Moulineaux (FR)
(86) Numéro de dépôt international: PCT/FR2006/050439
(87) Numéro de publication internationale: WO 2007/003815

(56) Documents cités:
- EP-A- 0 922 600
- US-A- 6 018 198
- US-A- 6 083 139
- US-B1- 6 543 561
- US-B2- 6 593 713

## Description

La présente invention concerne un procédé de transmission de puissance d'un véhicule hybride entre un arbre d'un moteur thermique et un arbre de roues d'un véhicule. L'invention a notamment pour but de faire démarrer rapidement le moteur thermique, tout en assurant notamment une continuité du couple appliqué aux roues. L'invention trouve une application particulièrement avantageuse dans le domaine des véhicules automobiles, mais elle pourrait aussi être mise en oeuvre dans tout type de véhicule terrestre à motorisation hybride.

On connaît des véhicules hybrides qui combinent l'utilisation de l'énergie thermique d'un moteur thermique et de l'énergie électrique d'une machine électrique pour réaliser leur traction. Cette combinaison des énergies est réalisée de manière à optimiser le rendement énergétique de tels véhicules. Cette optimisation du rendement énergétique permet aux véhicules hybrides de polluer et consommer largement moins que les véhicules qui fonctionnent uniquement à l'énergie thermique.

Dans le présent texte, le terme "démarrage" est utilisé pour désigner la mise en rotation du vilebrequin du moteur thermique. Le terme de "décollage" est utilisé pour désigner la mise en mouvement du véhicule, lorsqu'il passe d'une vitesse nulle à une vitesse non nulle.

Plusieurs types de dispositifs de transmission de puissance pour véhicule hybride ont été plus particulièrement développés.

On connaît des dispositifs de transmission hybrides comportant un moteur thermique et une seule machine électrique. Un arbre de ce moteur thermique et un arbre de cette machine électrique sont reliés entre eux par l'intermédiaire d'un embrayage. En outre, un élément variateur de vitesse, tel qu'une boîte de vitesses, est relié à l'arbre de la machine électrique et à l'arbre des roues du véhicule. Un tel dispositif est susceptible de fonctionner dans deux modes différents. Dans un premier mode appelé mode électrique, seule la machine électrique assure la traction du véhicule. Dans un second mode appelé mode hybride, la machine électrique et le moteur thermique assurent ensemble la traction du véhicule.

Dans le mode hybride, la puissance fournie par la machine électrique permet d'ajuster le couple appliqué sur l'arbre de roues tout en adaptant le couple et le régime du moteur thermique à un point de fonctionnement où la consommation énergétique du véhicule est optimisée.

Chaque organe du dispositif de transmission : moteur thermique, embrayage, machine électrique et élément variateur de vitesse, est piloté par un dispositif de contrôle rapproché qui est lui-même commandé par une unité de commande électronique appelée calculateur de supervision. Ce calculateur peut être indépendant ou intégré dans un autre calculateur comme le calculateur de contrôle moteur par exemple. Ce calculateur de supervision exécute des programmes pour synchroniser notamment entre elles des actions des différents organes du dispositif de transmission. Cette synchronisation est réalisée de manière à répondre au mieux à une volonté d'accélération d'un conducteur.

Plus précisément, en fonction de l'accélération souhaitée par l'utilisateur et de conditions de roulage du véhicule, le calculateur de supervision, pilote les différents organes du dispositif, décide du mode de fonctionnement, coordonne les phases transitoires des différents organes, et choisit des points de fonctionnement du moteur et de la machine électrique. Par conditions de roulage, on entend des paramètres du véhicule ainsi que des paramètres extérieurs susceptibles d'influencer la conduite du véhicule. La vitesse et l'accélération du véhicule sont par exemple des paramètres du véhicule, tandis que le degré d'inclinaison d'une pente ou le taux d'humidité d'une route constituent des paramètres extérieurs.

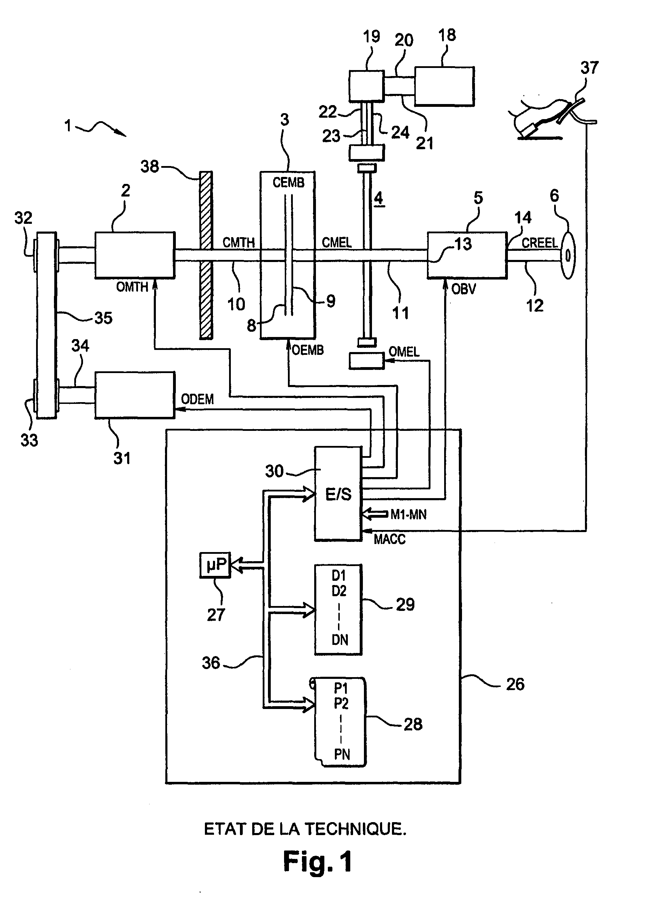

La figure 1 montre une représentation schématique d'un dispositif 1 de transmission selon l'état de la technique. Ce dispositif 1 de transmission comporte un moteur 2 thermique, un embrayage 3, une machine 4 électrique, un élément variateur de vitesse constitué par exemple par une boîte 5 de vitesses, et des roues 6 qui forment une chaîne de traction.

Plus précisément, l'embrayage 3 comporte un premier disque 8 et un deuxième disque 9 d'embrayage. Le premier disque 8 d'embrayage est relié à un arbre 10 du moteur 2 thermique. Et le deuxième disque 9 d'embrayage est relié à un arbre 11 de la machine 4 électrique. En outre, l'arbre 11 de la machine électrique 4 et un arbre 12 des roues 6 sont reliés respectivement à une entrée 13 et à une sortie 14 de la boite 5 de vitesses.

Comme on l'a vu, le dispositif 1 de transmission est susceptible de fonctionner dans deux modes différents. Dans le mode électrique, l'arbre 12 des roues 6 est entraîné par la machine 4 électrique seulement. L'embrayage 3 est alors ouvert, de manière que l'arbre 10 du moteur 2 thermique et l'arbre 11 de la machine 4 ne soient pas accouplés entre eux. Dans ce mode électrique, la machine 4 se comporte généralement en moteur. Ainsi, dans une réalisation particulière, la machine 4 prélève de l'énergie à un système 18 de stockage, tel qu'une batterie, par l'intermédiaire notamment d'un onduleur 19. La batterie 18 délivre un signal de tension continu. Dans le mode électrique, l'onduleur 19 transforme donc le signal de tension continu observable entre les bornes 20 et 21 de la batterie, en signaux de tension alternatifs qui sont appliqués sur des phases 22-24 de la machine 4.

Dans le mode hybride, l'arbre 12 des roues 6 est entraîné par le moteur 2 thermique et la machine 4 électrique. L'embrayage 3 est alors fermé, de manière que l'arbre 10 du moteur 2 thermique et l'arbre 12 de roues 6 soient accouplés entre eux. La machine 4 se comporte en moteur ou en générateur et transmet une puissance à l'arbre 12 des roues 6 pour ajuster le couple observable sur cet arbre 12 à un couple de consigne. La machine échange ainsi constamment de l'énergie avec la batterie 18.

Dans le mode hybride et le mode électrique, pendant des phases de récupération qui correspondent à un ralentissement du véhicule, la machine 4 électrique se comporte en générateur. Pendant ces phases de récupération, la machine 4 électrique fournit de l'énergie à la batterie 18. L'onduleur 19 transforme alors les signaux de tension alternatifs observables sur les phases 22-24 de la machine électrique 4 en un signal de tension continu qui est appliqué aux bornes 20 et 21 de la batterie 18.

En outre, le dispositif 1 de transmission comporte un système 31 de démarrage indépendant. Ce système 31 de démarrage est relié au moteur 2 thermique par l'intermédiaire d'un système d'entraînement 32, 33, 35 et l'entraîne en rotation afin de le faire démarrer. Le système 31 de démarrage est indépendant mécaniquement de la machine 4. En effet, le système 31 démarre le moteur 2 sans prélever de puissance à la chaîne de traction, et en particulier, sans prélever de couple à l'arbre 12 de roues 6.

Dans une réalisation particulière, le système d'entraînement comporte une première poulie 32 qui est accrochée à une extrémité de son arbre 10. Et le système 31 de démarrage comporte une deuxième poulie 33 qui est accrochée à une extrémité de son arbre 34. Une courroie 35 passe par les gorges de ces deux poulies 32 et 33, de manière à relier le système 31 de démarrage au moteur 2 thermique.

Le dispositif 1 de transmission peut aussi comporter un volant 38 d'inertie. Ce volant 38 d'inertie contribue à assurer une fonction de filtration des acyclismes pour assurer une continuité dans la transmission du couple du moteur thermique 2 à l'arbre 6 des roues 12.

Dans la pratique, la machine 4 électrique est généralement une machine synchrone triphasée. Les machines de ce type présentent l'intérêt d'être compactes et de posséder un bon rendement.

L'embrayage 3 est un embrayage sec ou humide. En variante, l'embrayage 3 comporte plus de deux disques.

Par ailleurs, le dispositif 1 de transmission comporte un calculateur 26 de supervision spécifique. Ce calculateur 26 de supervision comporte un microprocesseur 27, une mémoire 28 programme, une mémoire 29 de données, et une interface 30 d'entrées-sorties qui sont reliés entre eux par l'intermédiaire d'un bus 36 de communication.

La mémoire 29 de données comporte des données D1-DN correspondant notamment aux caractéristiques des différents organes du dispositif 1 de transmission, à savoir le moteur 2 thermique, l'embrayage 3, la machine électrique 4, la boite 5 de vitesses et le système 31 de démarrage. Certaines des données D1-DN correspondent par exemple aux temps de réponse de ces organes. D'autres données D1-DN correspondent par exemple à des couples maximums et à des couples minimums applicables sur des arbres associés à ces organes.

L'interface 30 d'entrées-sorties reçoit des signaux M1-MN observables en sortie de capteurs (non représentés). Ces capteurs permettent de détecter les conditions de roulage du véhicule. Par exemple, des capteurs d'accélération et de vitesse permettent de connaître respectivement l'accélération et la vitesse du véhicule à un instant donné. Un capteur d'inclinaison peut permettre de savoir si le véhicule se trouve dans une pente ou pas. En outre, l'interface 30 reçoit un signal MACC correspondant à un couple à la roue souhaité par un conducteur. Ce signal MACC correspond à un degré d'enfoncement d'une pédale 37 d'accélération.

En fonction des données D1-DN, des conditions de roulage, et de l'accélération souhaitée par le conducteur, le microprocesseur 27 exécute un des programmes P1-PN qui engendre la mise en fonctionnement du dispositif 1 de transmission dans un mode particulier, et l'ajustement du couple observable sur l'arbre 12 des roues 6. Plus précisément, lors de l'exécution d'un des programmes P1-PN, le microprocesseur 27 commande l'interface 30, de manière que des signaux OMTH, OEMB, OMEL, OBV et ODEM soient émis respectivement à destination du moteur 2 thermique, de l'embrayage 3, de la machine 4 électrique, de la boite 5 de vitesses, et du système 31 de démarrage, pour les commander.

En outre, les organes 2-5 et 31 du dispositif 1 de transmission comportent chacun un système de contrôle interne qui permet de réguler la valeur des couples observables sur des arbres associés à ces organes.

Dans un exemple, pour une demande d'accélération faible de la part du conducteur, le calculateur 26 de supervision commande les différents organes 2-5 et 31, de manière à faire fonctionner le dispositif 1 de transmission dans le mode électrique. Le couple appliqué sur l'arbre 12 des roues 6 est alors égal au couple observable sur l'arbre 11 de la machine 4 électrique, à un rapport de démultiplication près. En revanche, pour une demande d'accélération forte, le calculateur 26 commande les différents organes 2-5 et 31, de manière à faire fonctionner le dispositif 1 dans le mode hybride. Le couple appliqué sur l'arbre 12 des roues 6 est alors égal au couple observable sur l'arbre 11 de la machine 4 électrique, lequel est alors égal à la somme du couple observable sur l'arbre 10 du moteur 2 thermique 2 et de celui de la machine 4.

Lorsque le véhicule passe du mode électrique au mode hybride, il existe un régime transitoire, pendant lequel le couple du moteur 2 thermique n'est pas disponible. En effet, lors de ce régime transitoire, le moteur 2 thermique démarre et son arbre 10 commence à s'accoupler avec l'arbre 11 de la machine électrique 4, sans que le couple du moteur 2 thermique ne soit transmis à l'arbre 12 des roues 6. Ce régime transitoire est particulièrement critique puisqu'il peut survenir plus de deux cents fois par heure de roulage, quelle que soit la vitesse du véhicule et le rapport engagé.

Lors du régime transitoire, le calculateur 26 de supervision doit donc piloter le système 31 de démarrage de manière spécifique, afin que le conducteur ne se rende pas compte du changement de mode du véhicule. Le temps de démarrage du moteur 2 doit donc être minimal lors d'une accélération. Par ailleurs, il faut veiller au respect du niveau d'accélération souhaité par le conducteur tout au long du régime transitoire, tout en assurant un confort acoustique au conducteur.

Dans les dispositifs 1 de transmission existants, pour passer d'un mode électrique à un mode hybride, le système 31 de démarrage transmet un couple d'arrachement au moteur 2 thermique. Ce couple d'arrachement correspond au couple à appliquer sur l'arbre du moteur 2 thermique pour lui faire passer ses premières compressions, afin qu'il devienne autonome. Toutefois, comme on va le voir ci-après, ce procédé ne permet pas de démarrer le moteur 2 assez rapidement pour éviter que le conducteur ne ressente les vibrations de démarrage du moteur.

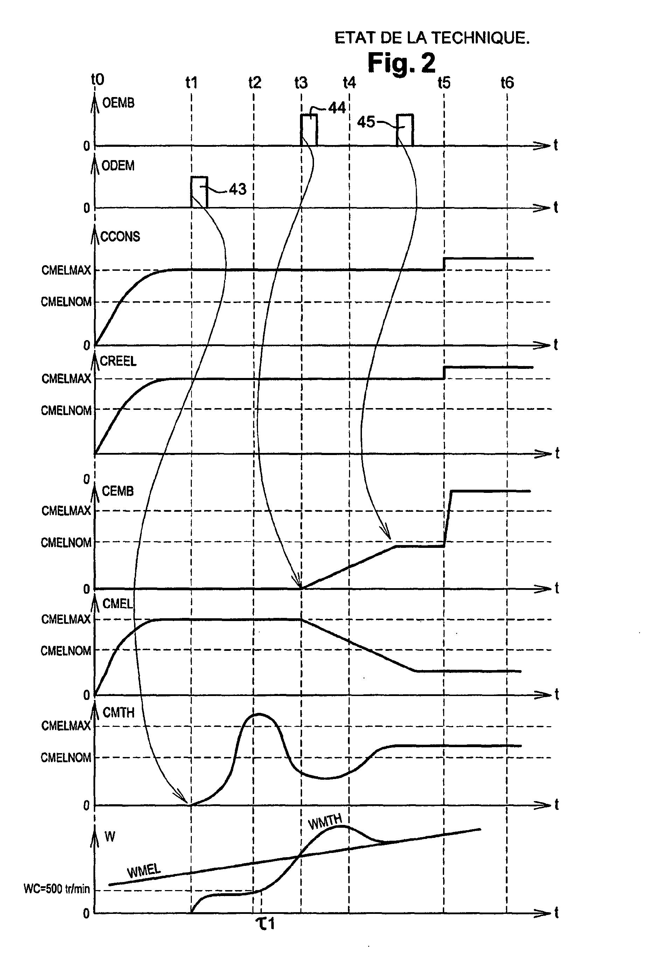

La figure 2 montre des chronogrammes de signaux observables sur les différents organes 2-5 du dispositif 1 de transmission, lorsque seul le système 31 est utilisé pour démarrer le moteur 2.

Plus précisément, la figure 2 montre les signaux de couple CEMB, CMEL et CMTH qui correspondent respectivement aux couples observables sur l'embrayage 3, sur l'arbre 11 de la machine, et sur l'arbre 10 du moteur.

La figure 2 montre également l'évolution dans le temps de signaux de couple CCONS et CREEL correspondant respectivement au couple de consigne à appliquer sur l'arbre 12 de roues 6 et au couple effectivement observable sur cet arbre 12. Le signal de couple CCONS de consigne est élaboré notamment à partir du signal d'accélération MACC et des signaux M1-MN issus des capteurs.

Les signaux OEMB et ODEM sont émis par le calculateur 26 à destination de l'embrayage 3 et du système 31 démarrage pour les commander. Pour plus de simplicité, les signaux OMTH, OMEL, et OBV ne sont pas représentés.

La figure 2 montre également sur un même chronogramme l'évolution dans le temps de la vitesse de rotation WMEL de la machine 4 électrique, et de la vitesse de rotation WMTH du moteur 2 thermique.

Dans les explications qui vont suivre, la valeur CMELMAX correspond à la valeur crête ou maximale du couple de la machine 4 électrique et la valeur CMELNOM correspond au couple nominal de cette machine 4.

A l'instant t0, la machine 4 a déjà été actionnée, c'est à dire qu'elle est déjà en rotation. Le véhicule a donc a priori décollé, c'est à dire qu'il est déjà en mouvement. Le moteur 2 thermique est éteint: il possède donc une vitesse de rotation WMTH et un couple CMTH nuls à l'instant t0.

Entre les instants t0 et t1, le couple CCONS de consigne augmente, si bien qu'à l'instant t1, il a déjà atteint le couple crête CMELMAX de la machine 4. Entre les instants t0 et t1, le couple CMEL de la machine 4 augmente, de manière à suivre le couple CCONS de consigne demandé. Ainsi, le couple CREEL mesuré sur l'arbre 12 de roues 6 correspond au couple CCONS de consigne. La vitesse de rotation WMEL de la machine 4 est non nulle et augmente linéairement. Le moteur 2 thermique est toujours à l'arrêt et son arbre 10 n'est pas accouplé avec l'arbre 11 de la machine électrique 4. Le moteur 2 possède donc un couple CMTH et une vitesse WMTH de rotation qui sont nuls tous les deux.

A l'instant t1, lorsque par exemple le conducteur enfonce la pédale 37 d'accélération de manière particulière, le calculateur 26 reçoit un signal MACC correspondant à une demande de changement de mode du véhicule.

Entre les instants t1 et t2, le dispositif 1 de transmission entre donc dans une première phase transitoire. Dans cette première phase, les signaux de couple CCONS, CREEL et CMEL sont toujours égaux au couple crête CMELMAX de la machine 4. A l'issue de l'exécution d'un des programmes P1-PN par le calculateur 26, un signal 43 est émis à destination du système 31 de démarrage. Ce signal 43 commande le système 31 qui entraîne en rotation le moteur 2 pour le faire démarrer. Un signal de couple CMTH correspondant au couple de démarrage de ce moteur 2 thermique est alors observable. Le moteur 2 possède alors une vitesse WMTH de rotation qui augmente, tout en restant inférieure à celle de la machine 4 électrique. Le moteur 2 thermique passe ainsi ses premières compressions mais ne transmet pas encore de couple à l'arbre 12, puisqu'il n'est pas encore accouplé avec l'arbre 11 de la machine 4.

Entre les instants t2 et t3, le dispositif 1 de transmission entre dans une deuxième phase transitoire. Dans cette deuxième phase, les signaux de couple CCONS, CREEL, CMEL possèdent toujours des valeurs égales à CMELMAX. Le signal de couple CMTH du moteur 2 thermique diminue légèrement, tandis que la vitesse de rotation WMTH de ce moteur 2 augmente pour atteindre à l'instant t3 la vitesse de rotation WMEL de la machine 4 électrique. Aucun couple CEMB n'est observable sur l'embrayage 3. Cette deuxième phase a pour but de faire monter en régime le moteur 2 pour permettre, comme on va le voir ci-après, une mise en glissement des disques 8 et 9 d'embrayage 3 l'un par rapport à l'autre.

Entre les instants t3 et t4, le dispositif 1 de transmission entre dans une troisième phase transitoire. Dans cette troisième phase, le signal de couple CCONS est égal au couple crête CMELMAX de la machine 4. Par ailleurs, dans cette troisième phase, dès que la vitesse de rotation WMTH du moteur 2 est supérieure à celle WMEL de la machine 4, un signal 44 est émis à destination de l'embrayage 3 par le calculateur 26. Ce signal 44 commande la mise en glissement des disques 8 et 9 d'embrayage l'un par rapport à l'autre. Le moteur 2 transmet alors une partie de son couple CMTH à l'arbre 12 par l'intermédiaire de l'embrayage 3. Le couple observable sur l'embrayage 3 augmente donc de manière calibrable et dans un exemple de manière linéaire. Tandis que le signal de couple CMEL de la machine 4 diminue en correspondance. Le couple CREEL est ainsi toujours égal au couple CCONS de consigne.

Entre les instants t4 et t5, le dispositif 1 de transmission entre dans une quatrième phase transitoire. Dans cette quatrième phase, il se produit dans un premier temps un accostage du moteur, puis, dans un deuxième temps, une fermeture de l'embrayage 3. Lors de l'accostage du moteur 2 thermique, sa vitesse de rotation WMTH converge vers celle WMEL de la machine 4 électrique, et, lorsque ces deux vitesses sont sensiblement égales, un signal 45 est émis à destination de l'embrayage 3 pour commander sa fermeture. Le couple CEMB de l'embrayage augmente ainsi jusqu'à la fermeture de cet embrayage 3, puis se stabilise. Le signal de couple CMEL de la machine 4 diminue de manière globalement symétrique par rapport au couple CEMB de l'embrayage 3. Le signal de couple CREEL et le signal de couple CCONS sont égaux au couple crête CMELMAX.

Entre les instants t5 et t6, le dispositif 1 de transmission entre dans une cinquième phase transitoire. Dans cette cinquième phase, le signal de couple CCONS de consigne augmente légèrement, à la manière d'un échelon par exemple. Les organes moteurs 2 et 4 du dispositif 1 convergent alors vers leur consigne de couple optimal au regard d'une consommation du moteur 2 thermique, s'ils ne l'ont pas déjà atteinte. Par ailleurs, le signal de couple CEMB d'embrayage augmente pour maintenir la fermeture de l'embrayage 3. Les vitesses de rotation WMTH et WMEL du moteur 2 et de la machine 4 augmentent avec la vitesse du véhicule.

Ce procédé permet de dissocier les actions de démarrage du moteur thermique, de celles de traction. Toutefois, l'utilisation du système de démarrage seul oblige le moteur 2 à fonctionner pendant une longue durée à des régimes où ses vibrations sont ressenties par le conducteur.

Plus précisément, le couple du système 31 de démarrage est important lorsque son régime est inférieur à un régime WC critique, dont la valeur est comprise entre 300 et 400tr/min. Tandis que ce couple est faible lorsque le système 31 fonctionne à un régime supérieur à ce régime WC critique. Le moteur 2 thermique fonctionne donc à un régime inférieur au régime WC critique pendant la durée de son démarrage, jusqu'à ce qu'il devienne autonome. Or lorsque le moteur possède un régime inférieur au régime critique comprise entre 300 et 400tr/min, les couples de compression / détente du moteur engendrent des vibrations basses fréquences qui se transmettent au châssis du véhicule par l'intermédiaire des suspensions du moteur. Ces vibrations peuvent donc être ressenties par le conducteur, ce qui peut être désagréable pour lui. On connait également du document US 6018198A, un procédé de démarrage mettant en oeuvre un couple de compensation.

L'invention se propose donc de résoudre ces problèmes de temps démarrage et de mise à disposition du moteur thermique lors d'un changement de mode du véhicule

A cet effet, dans l'invention, pour faire démarrer le moteur thermique, on utilise, de manière combinée, le système de démarrage et l'embrayage. Ainsi, lors du passage du mode électrique au mode hybride, l'embrayage et le système de démarrage transmettent simultanément le couple d'arrachement au moteur thermique afin de le faire démarrer.

De cette manière, on augmente le couple apporté au moteur à l'arrêt. En effet, le couple observable sur l'arbre du moteur au moment du démarrage est égal à la somme du couple observable sur l'arbre du système de démarrage et d'une partie du couple observable sur l'arbre de roues. On accélère donc la montée en régime du vilebrequin ce qui conduit à réduire la période durant laquelle le moteur est au régime où les vibrations du moteur sont les plus ressentis. La réduction de la durée de mise en rotation du moteur permet en outre de réduire significativement la durée totale du démarrage moteur. La réduction du temps de démarrage permet ainsi d'obtenir plus de flexibilité dans l'arbitrage des décisions de démarrage du moteur et donc d'obtenir le meilleur compromis possible entre la consommation du véhicule et le confort du conducteur.

Le procédé de démarrage selon l'invention permet en outre d'augmenter la robustesse et la fiabilité du démarrage. En effet, avec l'invention, le démarrage du moteur est moins dépendant des caractéristiques ou de la disponibilité d'un système de démarrage unique, puisque l'embrayage y participe.

On peut par ailleurs mettre à profit le procédé selon l'invention pour réduire les performances opérationnelles du système de démarrage et réduire le coût de la transmission. En effet, comme une partie du couple d'arrachement est appliqué par l'embrayage, on peut utiliser un système de démarrage plus petit et moins cher qu'un système de démarrage qui assurerait seul le démarrage du moteur.

Le couple appliqué par l'embrayage sur l'arbre du moteur est prélevé à l'arbre de roues. Pendant la transmission du couple d'arrachement, la machine électrique applique donc un couple de compensation sur l'arbre de roues, de manière qu'il n'y ait pas de variations brutales de ce couple qui pourraient être désagréables pour le conducteur.

A cet effet, la machine électrique fonctionne à un couple inférieur à son couple crête de manière à posséder une garde de couple suffisante pour compenser le couple prélevé par l'embrayage. Dans une mise en oeuvre particulière, la machine électrique fonctionne, hors phase transitoire, au maximum à son couple nominal, de manière à pouvoir fonctionner à un couple supérieur lui permettant de compenser le couple prélevé par l'embrayage.

L'invention concerne donc un procédé de transmission de puissance entre un arbre d'un moteur thermique et un arbre de roues d'un véhicule hybride, conforme à l'objet de la revendication 1.

L'invention sera mieux comprise à la lecture de la description qui suit et à l'examen des figures qui l'accompagnent. Ces figures sont données à titre illustratif mais nullement limitatif de l'invention. Ces figures montrent :
- Figure 1 (déjà décrite): une représentation schématique d'un dispositif de transmission de puissance selon l'état de la technique ;
- Figure 2 (déjà décrite): des chronogrammes de signaux observables sur des organes du dispositif de transmission selon l'état de la technique, lors d'un changement de mode, avec un procédé selon l'état de la technique ;
- Figure 3 : des chronogrammes de signaux observables sur des organes du dispositif de transmission selon l'état de la technique, lors d'un changement de mode, avec un procédé selon l'invention ;
- Figure 4 : des représentations graphiques de la vitesse de rotation du moteur thermique en fonction du temps pour différentes valeurs de couple d'arrachement appliqué par l'embrayage sur l'arbre de ce moteur.

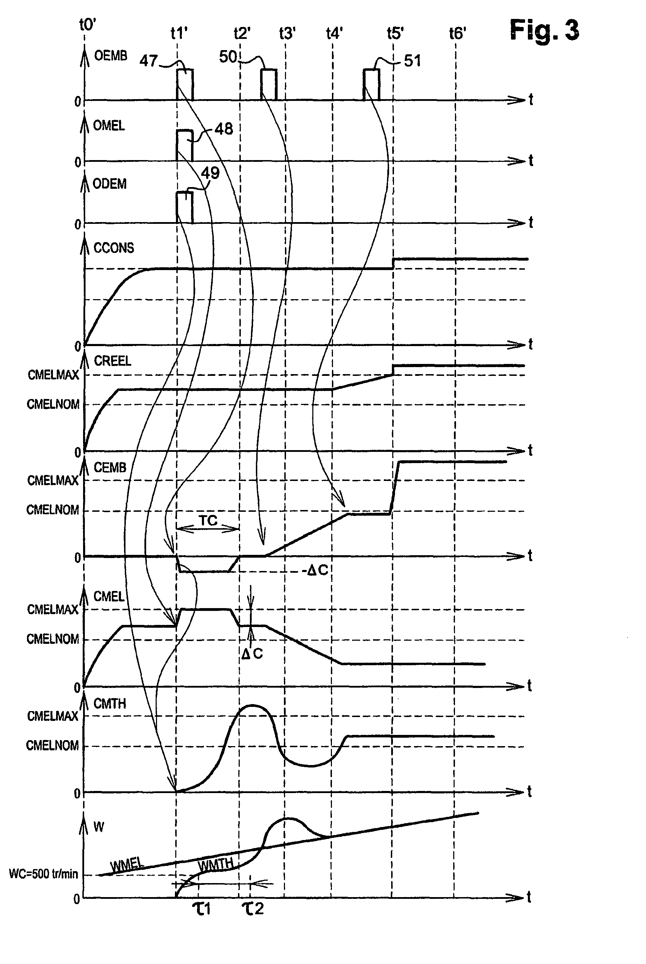

La figure 3 montre notamment des chronogrammes des signaux observables sur les différents organes 2-5 du dispositif 1 de transmission, lorsque le procédé selon l'invention est mis en oeuvre, c'est à dire lorsque le système 31 indépendant et l'embrayage 3 appliquent ensemble le couple d'arrachement sur l'arbre moteur pour le faire démarrer. Pour pouvoir comparer les différents signaux, les conditions initiales et le signal de couple CCONS de consigne sont les mêmes que pour la figure 2.

Plus précisément, entre les instants t0' et t1', le signal de couple CCONS de consigne augmente de manière croissante, en correspondance notamment avec une demande d'accélération du conducteur. Ce couple CCONS de consigne augmente, si bien qu'à l'instant t1', il a déjà atteint le couple crête CMELMAX de la machine 4 électrique. Par ailleurs, entre les instants t0' et t1', la machine 4 possède un couple CMEL qui augmente pour se stabiliser à une valeur de couple inférieure à la valeur de son couple maximal CMELMAX. La vitesse de rotation WMEL de la machine 4 est non nulle et augmente linéairement. Le moteur 2 thermique est à l'arrêt et son arbre 10 n'est pas accouplé avec l'arbre 11 de la machine 4. Le moteur 2 possède donc un couple CMTH et une vitesse WMTH de rotation qui sont nuls tous les deux. Le signal de couple CREEL mesuré sur l'arbre 12 des roues 6 suit donc l'allure du signal de couple CMEL. Aucun couple n'est observable sur l'embrayage 3.

A l'instant t'1, lorsqu'une variation angulaire de la pédale est supérieure à une valeur seuil, le calculateur 26 reçoit un signal MACC correspondant à une demande de changement de mode du véhicule.

Entre les instants t'1 et t'2, le dispositif 1 de transmission entre alors dans une première phase transitoire. Dans cette première phase, le couple CCONS de consigne est toujours globalement égal au couple crête CMELMAX. A l'instant t'1, trois signaux 47-49 sont émis simultanément par le calculateur 26 respectivement à destination de l'embrayage 3, de la machine 4 électrique et du système 31 de démarrage. Les signaux 47 et 49 commandent respectivement l'embrayage 3 et le système 31 de démarrage, de manière qu'ils transmettent simultanément et ensemble le couple d'arrachement au moteur 2 thermique pour le faire entrer en rotation. Ce couple d'arrachement CARR est transmis en partie par le système 31 et en partie par l'embrayage 3. Ainsi, à des rapports de démultiplication près, la somme du couple -ΔC appliqué par l'embrayage 3 et du couple appliqué par système 31 de démarrage sur l'arbre 10 du moteur 2 thermique est au moins égal au couple minimum d'arrachement de ce moteur. Le couple -ΔC est prélevé par l'embrayage 3 à l'arbre 12 de roues 6.

Le signal 48 est émis à destination de la machine 4, de manière que le couple de cette machine 4 augmente d'une valeur d'un couple ΔC de compensation qui compense le couple prélevé sur l'arbre 12 par l'embrayage 3. Le couple ΔC de compensation appliqué par la machine 4 sur l'arbre 12 possède de préférence la même valeur que le couple -ΔC appliqué par l'embrayage 3. En outre, le couple ΔC de compensation est appliqué par la machine 4 sur l'arbre 12 pendant la même durée TC que celle sur laquelle l'embrayage 3 prélève le couple ΔC à l'arbre 6 de roues.

Afin de pouvoir fournir le couple ΔC de compensation, la machine 4 électrique fonctionne à un couple inférieur à son couple crête CMELMAX dans le mode électrique. Et, lors du changement de mode, pour que l'embrayage 3 puisse fournir au moteur 2 le plus de couple possible, la machine 4 électrique fonctionne au plus à son couple maximum CMELMAX.

Par ailleurs, lors de cette première phase transitoire est observable un signal de couple CMTH du moteur 2 thermique correspondant à son couple de démarrage. Le moteur 2 possède alors une vitesse de rotation WMTH qui augmente, mais qui reste inférieure à la vitesse de rotation WMEL de la machine 4. Le moteur 2 ne transmet toujours pas son couple à l'arbre 6 de roues 12, puisqu'il n'est pas accouplé avec l'arbre 11 de la machine 4. Le couple CREEL est donc égal au couple de la machine 4. La première phase transitoire a pour but de faire passer au moteur 2 ses premières compressions, afin qu'il fonctionne à un régime WMTH suffisant pour être autonome. Dès que le moteur atteint ce régime d'autonomie, le système 31 de démarrage est généralement coupé.

Entre les instants t2' et t3', le dispositif 1 de transmission entre dans une deuxième phase transitoire. Dans cette deuxième phase, le couple CCONS de consigne est toujours globalement égal à CMELMAX. Le régime WMTH du moteur augment toujours et au moment où la vitesse de rotation WMTH imposée au disque 9 d'embrayage par le moteur 2 est égale à celle imposée au disque 8 par la machine 4, on ouvre l'embrayage 3. En effet, une fois le moteur 2 autonome, on ouvre l'embrayage 3 à l'occasion du croisement des régimes afin d'éviter une éventuelle rupture de couple par inversion du couple transmis par l'embrayage 3.

La vitesse de rotation WMEL de l'arbre 11 de la machine 4 électrique augmente linéairement. Tandis que la vitesse de rotation WMTH de l'arbre 10 du moteur 2 thermique augmente pour atteindre la vitesse de rotation WMEL de la machine électrique 4.

Dès que la vitesse de rotation WMTH imposée au premier disque 8 d'embrayage par le moteur 2 est supérieure à celle imposée au deuxième disque 9 par la machine 4, un signal 50 est émis par le calculateur 26 de supervision à destination de l'embrayage 3. Ce signal 50 commande la mise en glissement des disques 8 et 9 d'embrayage l'un par rapport à l'autre. Le moteur 2 transmet alors une partie de son couple CMTH à l'arbre 12 des roues 6 par l'intermédiaire de l'embrayage 3. Le signal de couple CEMB observable sur l'embrayage 3 augmente alors linéairement de manière calibrable. Tandis que le signal de couple CMEL de la machine 4 diminue de manière globalement symétrique par rapport au signal de couple CEMB.

Entre les instants t3' et t4', le dispositif 1 de transmission entre dans une troisième phase transitoire. Dans cette troisième phase, il se produit essentiellement un accostage du moteur, lors duquel la vitesse de rotation imposée au premier disque 8 d'embrayage par le moteur thermique converge vers la vitesse de rotation imposée au deuxième disque 9 par la machine 4 électrique. Le couple CCONS de consigne est toujours globalement égal au couple crête CMELMAX.

Entre les instants t4' et t5', le dispositif 1 de transmission entre dans une quatrième phase transitoire. Dans cette quatrième phase transitoire, il se produit essentiellement, une fermeture de l'embrayage 3. Plus précisément, lorsque les vitesses de rotation des disques 8 et 9 de l'embrayage entraînés respectivement par le moteur 2 et la machine 4 sont sensiblement égales, un signal 51 est émis à destination de l'embrayage 3 par le calculateur 26. Ce signal 51 commande la fermeture de cet embrayage 3.

Les vitesses de rotation du moteur WMTH et de la machine WMEL deviennent alors identiques. Par exemple, ce signal 51 est émis lorsque la différence entre la vitesse de rotation WMTH du moteur thermique 2 et la vitesse de rotation WMEL de la machine électrique 4 est inférieure en valeur absolue à une valeur comprise entre 0 et 15% de la vitesse de rotation WMEL de la machine 4. Par ailleurs, le signal de couple CEMB de l'embrayage 3 augmente pour se stabiliser, tandis que le signal de couple CMEL diminue pour se stabiliser.

Entre les instants t5' et t6', le dispositif 1 de transmission entre dans une cinquième phase transitoire de régulation. Dans cette cinquième phase, le couple CCONS de consigne augmente légèrement, de manière calibrée, à la manière d'un échelon par exemple. Les organes moteurs 2 et 4 du dispositif 1 convergent alors vers leur signal de consigne de couple optimal, s'ils ne l'ont pas déjà atteinte. L'embrayage est maintenu fermé et son couple CEMB augmente de manière à dépasser le couple CMTH. Les vitesses de rotation du moteur thermique WMTH et de la machine électrique WMEL augmentent avec la vitesse du véhicule. Le signal de couple CREEL suit l'évolution du signal de couple de consigne CCONS.

En utilisant de manière combinée l'embrayage et le système de démarrage, on s'aperçoit que le moteur 2 monte plus vite en régime que lorsque seul le système de démarrage est utilisé pour transmettre le couple d'arrachement. En effet, comme on va le voir ci-après, avec le procédé selon l'invention, le moteur 2 fonctionne à un régime inférieur au régime WC critique pendant une durée τ2 inférieure à la durée τ1.

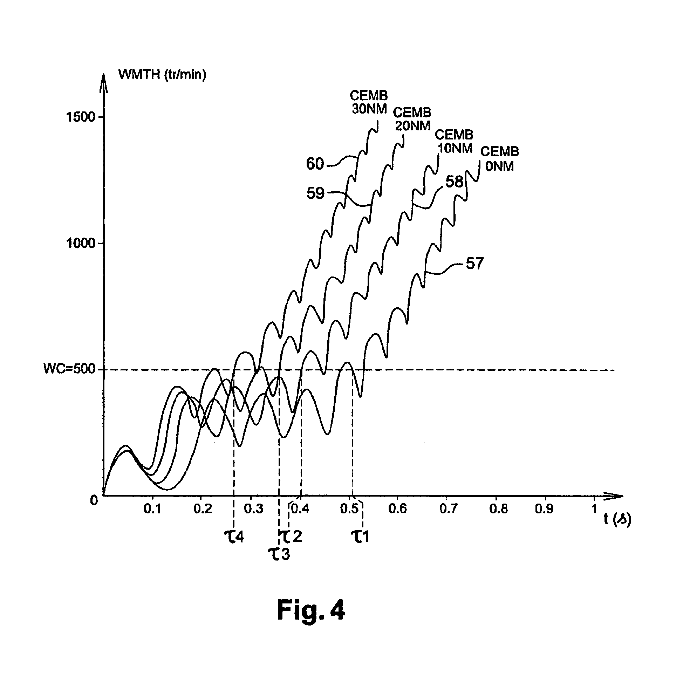

La figure 4 montre, à travers des courbes 57-60, une représentation graphique de l'augmentation de la vitesse de rotation WMTH du moteur 2, suivant des couples différents appliqués par l'embrayage 3

Les courbes 57-60 oscillent chacune autour d'une valeur moyenne. Ces oscillations sont dues à un échantillonnage particulier des valeurs de la vitesse de rotation du moteur.

Plus précisément, la courbe 57 représente la vitesse de rotation du moteur 2 thermique pour un couple nul appliqué par l'embrayage 3. Cette courbe 57 correspond au procédé de l'état de la technique dans lequel seul le système 31 de démarrage fait démarrer le moteur 2. Dans ce procédé, le moteur 2 fonctionne en dessous du régime WC critique de 500 t/min, pendant la durée τ1 qui vaut environ 0.5 s.

Les courbes 58, 59 et 60 représentent l'évolution de la vitesse de rotation du moteur 2 thermique lorsqu'un couple de 10, 20 ou 30 N.m est appliqué par l'embrayage 3 sur l'arbre du moteur 2 thermique, en complément du couple appliqué par le système 31 de démarrage.

Pour un couple appliqué par l'embrayage de 10 N.m, le moteur 2 thermique fonctionne en dessous du régime WC critique pendant une durée τ2 valant 0,4s environ. Pour un couple appliqué par l'embrayage de 20 N.m, le moteur 2 thermique fonctionne en dessous du régime WC critique pendant une durée τ3 de 0,35s environ. Pour un couple appliqué par l'embrayage de 30 Nm, le moteur 2 thermique fonctionne en dessous du régime critique pendant une durée τ4 de 0,25 s environ.

Ainsi, on observe qu'avec un couple de 30 N.m appliqué sur son arbre, le moteur 2 thermique fonctionne pendant deux fois moins de temps à un régime inférieur à 500tr/min (régime critique), par rapport au cas où seul le système 31 de démarrage assure le démarrage du moteur 2 thermique.

Dans la pratique, on applique de préférence un couple sur l'arbre du moteur par l'intermédiaire de l'embrayage qui est compris entre 10 et 40 N.m.

Le procédé selon l'invention permet ainsi de diminuer le temps global de démarrage. En effet, le vilebrequin est amené plus rapidement au régime de l'arbre de roues ce qui permet d'anticiper l'accostage de l'embrayage.

En outre, le démarrage est rendu plus fiable. Car l'adjonction d'un couple transmis par l'embrayage au couple fourni par le système de démarrage permet de dépasser rapidement la valeur du couple de compression du moteur. On réduit ainsi la probabilité de défaillance d'un démarrage lié à une position vilebrequin initiale défavorable.

## Revendications

1. Procédé de transmission de puissance entre un arbre (10) d'un moteur (2) thermique et un arbre (12) des roues (6) d'un véhicule hybride, dans lequel :
- on met en oeuvre un dispositif (1) de transmission de puissance comportant un moteur thermique (2), un embrayage (3), un élément variateur de vitesse (5), une machine (4) électrique reliée d'une part au moteur (2) thermique par l'embrayage (3), et d'autre part à l'arbre (12) des roues (6) par l'élément variateur de vitesse (5), un système (31) de démarrage du moteur (2) thermique indépendant mécaniquement de la machine (4) électrique et relié au moteur (2) thermique, et un calculateur de supervision (26) gérant les conditions de roulage et de l'accélération souhaitée par le conducteur pour émettre des signaux de commande vers respectivement, le moteur (2) thermique, l'embrayage (3), la machine (4) électrique, le variateur de vitesses (5) et le système de démarrage (31), dans lequel, le moteur thermique étant à l'arrêt et son arbre (10) n'étant pas accouplé à l'arbre (12) des roues (6) :
- on commande la machine (4) électrique pour qu'elle délivre sur l'arbre (12) des roues (6), un couple déterminé, inférieur à son couple crête (CMELMAX) dans le mode électrique,
- on commande le démarrage du moteur (2) thermique en appliquant un couple d'arrachement sur l'arbre (10) du moteur (2) qui est égal à la somme du couple (-ΔC) prélevé à l'arbre (12) des roues (6) et appliqué par l'embrayage (3) sur l'arbre (10) du moteur (2), et du couple appliqué par le système (31) de démarrage, et
- on compense le couple (-ΔC), appliqué par l'embrayage (3), par un couple (ΔC) de compensation qui est appliqué par la machine (4) électrique sur l'arbre (12) des roues (6) sur la même durée (TC) que celle sur laquelle est appliquée le couple (-ΔC) sur l'arbre (10) du moteur (2) thermique par l'embrayage (3), de manière à garantir la continuité du couple aux roues (6) pendant le démarrage du moteur (2) thermique.

2. Procédé selon la revendication 1, dans lequel :
- après avoir démarré le moteur (2) thermique et après avoir actionné la machine (4) électrique, on augmente la vitesse de rotation (WMTH) du moteur (2) thermique jusqu'à ce que la vitesse imposée à un premier disque (8) de l'embrayage (3) par ce moteur (10) thermique soit supérieure à celle imposée par la machine (4) électrique sur un deuxième disque (9) de l'embrayage (3).

3. Procédé selon la revendication 2, dans lequel :
- pendant le moment où la vitesse de rotation (WMTH) imposée au premier disque (8) d'embrayage par le moteur (2) est égale à celle (WMEL) imposée au deuxième disque (9) d'embrayage par la machine (4) électrique, on ouvre l'embrayage (3).

4. Procédé selon l'une des revendications 2 ou 3, dans lequel :
- dès que la vitesse de rotation (WMTH) imposée au premier disque (8) d'embrayage par le moteur (2) thermique est supérieure à celle (WMEL) imposée au deuxième disque (9) par la machine (4) électrique, on fait glisser ce disques (8, 9) l'un par rapport à l'autre.

5. Procédé selon la revendication 4, dans lequel :
- on fait converger la vitesse de rotation (WMTH) imposée au premier disque (8) d'embrayage (3) par le moteur (2) thermique vers la vitesse de rotation (WMEL) imposée au deuxième disque (9) par la machine (4) électrique, et
- on ferme l'embrayage (3) lorsque ces vitesses de rotation (WMEL, WMTH) sont sensiblement égales.

6. Procédé selon l'une des revendications 1 à 5, dans lequel :
- après avoir fermé l'embrayage (3), on fait converger le couple du moteur (2) thermique, et le couple de la machine (4) électrique vers leur valeur de consigne optimale au regard de la consommation du moteur (2) thermique.

7. Procédé selon l'une des revendications 1 à 6 dans lequel :
- une fois que le moteur (2) thermique est démarré, on attend qu'il passe ses premières compressions pour être autonome, puis on coupe le système (31) de démarrage.

## Claims

1. Method of transmitting power between a shaft (10) of a heat engine (2) and a shaft (12) of wheels (6) of a hybrid vehicle, in which:
- a power transmission device (1) is used comprising a heat engine (2), a clutch (3), a variable speed drive element (5), an electrical machine (4) connected on the one hand to the heat engine (2) by the clutch (3), and on the other hand to the shaft (12) of the wheels (6) by the variable speed drive element (5), a starting system (31) of the heat engine (2) which is mechanically independent of the electrical machine (4) and connected to the heat engine (2), and a monitoring computer (26) managing the conditions for running and for the desired acceleration by the driver to emit command signals respectively to the heat engine (2), the clutch (3), the electrical machine (4), the variable speed drive (5) and the starting system (31), in which, with the heat engine being at a standstill and its shaft (10) not being coupled to the shaft (12) of the wheels (6):
- the electrical machine (4) is commanded so that it delivers on the shaft (12) of the wheels (6) a specified torque, less than its peak torque (CMELMAX) in the electrical mode,
- the starting-up of the heat engine (2) is commanded by applying a breakaway torque on the shaft (10) of the engine (2) which is equal to the sum of the torque (-ΔC) taken at the shaft (12) of the wheels (6) and applied by the clutch (3) on the shaft (10) of the engine (2), and of the torque applied by the starting system (31), and
- the torque (-ΔC), applied by the clutch (3), is compensated by a compensation torque (ΔC) which is applied by the electrical machine (4) on the shaft (12) of the wheels (6) over the same duration (TC) as that over which the torque (-ΔC) is applied on the shaft (10) of the heat engine (2) by the clutch (3), so as to guarantee the continuity of the torque to the wheels (6) during the starting up of the heat engine (2).

2. Method according to Claim 1, in which:
- after having started up the heat engine (2) and after having actuated the electrical machine (4), the rotation speed (WMTH) of the heat engine (2) is increased until the speed imposed on a first disc (8) of the clutch (3) by this heat engine (10) is greater than that imposed by the electrical machine (4) on a second disc (9) of the clutch (3).

3. Method according to Claim 2, in which:
- during the moment at which the rotation speed (WMTH) imposed on the first clutch disc (8) by the engine (2) is equal to that (WMEL) imposed on the second clutch disc (9) by the electrical machine (4), the clutch (3) is opened.

4. Method according to one of Claims 2 or 3, in which:
- as soon as the rotation speed (WMTH) imposed on the first clutch disc (8) by the heat engine (2) is greater than that (WMEL) imposed on the second disc (9) by the electrical machine (4), these discs (8, 9) are caused to slide one with respect to the other.

5. Method according to Claim 4, in which:
- the rotation speed (WMTH) imposed on the first disc (8) of clutch (3) by the heat engine (2) is made to converge toward the rotation speed (WMEL) imposed on the second disc (9) by the electrical machine (4), and
- the clutch (3) is closed when these rotation speeds (WMEL, WMTH) are substantially equal.

6. Method according to one of Claims 1 to 5, in which:
- after having closed the clutch (3), the torque of the heat engine (2) and the torque of the electrical machine (4) are made to converge toward their optimal setpoint value with respect to the consumption of the heat engine (2).

7. Method according to one of Claims 1 to 6, in which:
- once the heat engine (2) has started up, one waits for it to pass its first compressions to be autonomous, then one shuts off the starting system (31).

## Patentansprüche

1. Verfahren zum Übertragen von Leistung zwischen einer Welle (10) eines Verbrennungsmotors (2) und einer Welle (12) der Räder (6) eines Hybridfahrzeugs, bei dem:
- man eine Vorrichtung (1) zum Übertragen von Leistung umsetzt, die einen Verbrennungsmotor (2), eine Kupplung (3), ein Regelantriebselement (5), eine Elektromaschine (4), die einerseits mit dem Verbrennungsmotor (2) über die Kupplung (3) und andererseits mit der Welle (12) der Räder (6) über das Regelantriebselement (5) verbunden ist, ein Startsystem (31) des Verbrennungsmotors (2), das von der Elektromaschine (4) unabhängig ist und mit dem Verbrennungsmotor (2) verbunden ist, und einen Überwachungsrechner (26) aufweist, der die Fahrbedingungen und Bedingungen des Beschleunigens, das der Fahrer wünscht, verwaltet, um Steuersignal jeweils zu dem Verbrennungsmotor (2), der Kupplung (3), der Elektromaschine (4), dem Regelantriebselement (5) und dem Startsystem (31) zu senden, bei dem, wenn der Verbrennungsmotor stillsteht und seine Welle (10) nicht mit der Welle (12) der Räder (6) gekuppelt ist:
- man die Elektromaschine (4) steuert, damit sie auf die Welle (12) der Räder (6) ein bestimmtes Moment liefert, das kleiner ist als ihr Spitzenmoment (CMELMAX) in der elektrischen Betriebsart,
- man das Starten des Verbrennungsmotors (2) steuert, indem man ein Zugmoment auf die Welle (10) des Motors (2) anlegt, das gleich der Summe des Moments (-ΔC), das von der Welle (12) der Räder (6) abgenommen und von der Kupplung (3) auf die Welle (10) des Motors (2) angelegt wird, und des Moments ist, das von dem Startsystem (31) angelegt wird, und
- man das Moment (-ΔC), das von der Kupplung (3) angelegt wird, durch ein Ausgleichsmoment (ΔC) ausgleicht, das von der Elektromaschine (4) auf der Welle (12) der Räder (6) während der gleichen Dauer (TC) wie die anlegt wird, während der das Moment (-ΔC) auf die Welle (10) des Verbrennungsmotors (2) von der Kupplung (3) angelegt wird, so dass die Kontinuität des Moments an den Rädern (6) während des Startens des Verbrennungsmotors (2) garantiert wird.

2. Verfahren nach Anspruch 1, bei dem:
- man nach dem Starten des Verbrennungsmotors (2) und nach dem Betätigen der Elektromaschine (4) die Drehzahl (WMTH) des Verbrennungsmotors (2) erhöht, bis die Drehzahl, die einer ersten Scheibe (8) der Kupplung (3) von diesem Verbrennungsmotor (2) auferlegt wird, größer ist als die, die die Elektromaschine (4) einer zweiten Scheibe (9) der Kupplung (3) auferlegt.

3. Verfahren nach Anspruch 2, bei dem:
- man während des Augenblicks, in dem die Drehzahl (WMTH), die der ersten Kupplungsscheibe (8) von dem Motor (2) auferlegt wird, gleich der (WMEL) ist, die die Elektromaschine (4) der zweiten Kupplungsscheibe (9) auferlegt, die Kupplung (3) öffnet.

4. Verfahren nach einem der Ansprüche 2 oder 3, bei dem:
- man, sobald die Drehzahl (WMTH), die der ersten Kupplungsscheibe (8) von dem Verbrennungsmotor (2) auferlegt wird, größer ist als die (WMEL), die die Elektromaschine (4) der zweiten Scheibe (9) auferlegt, diese Scheiben (8, 9) zueinander gleiten lässt.

5. Verfahren nach Anspruch 4, bei dem:
- man die Drehzahl (WMTH), die der ersten Scheibe (8) der Kupplung (3) von dem Verbrennungsmotor (2) auferlegt wird, zu der Drehzahl (WMEL), die die Elektromaschine (4) der zweiten Scheibe (9) auferlegt, konvergieren lässt, und
- man die Kupplung (3) schließt, wenn diese Drehzahlen (WMEL, WMTH) im Wesentlichen gleich sind.

6. Verfahren nach einem der Ansprüche 1 bis 5, bei dem:
- man nach dem Schließen der Kupplung (3) das Moment des Verbrennungsmotors (2) und das Moment der Elektromaschine (4) zu ihrem für den Verbrauch des Verbrennungsmotors (2) optimalen Sollwert konvergieren lässt.

7. Verfahren nach einem der Ansprüche 1 bis 6, bei dem:
- man, sobald der Verbrennungsmotor (2) startet, wartet, dass er seine ersten Verdichtungen durchläuft, um autonom zu sein, und man dann das Startsystem (31) abschaltet.
